# EUROPEAN PATENT APPLICATION

(11) **EP 4 575 879 A1**
(43) Date of publication of application: **25.06.2025**
(21) Application number: 24214723.9
(22) Date of filing: 22.11.2024
(51) Int. Cl.: G06F 30/392, G03F 7/00, H01L 25/065, G06F 115/12, G06F 119/18

(54) **METHODS AND APPARATUS FOR DISAGGREGATION OF SEMICONDUCTOR DIES IN AN INTEGRATED CIRCUIT PACKAGE**

(30) Priority: 22.12.2023 US 202318394836
(71) Applicant: INTEL Corporation, Santa Clara, CA 95054 (US)
(72) Inventor: PATYRA, Marek, Portland, 97229 (US)
(74) Representative: HGF

(57) **Abstract**

Methods and apparatus for disaggregation of semiconductor dies in an integrated circuit package. An example apparatus includes interface circuitry, machine readable instructions, programmable circuitry to at least one of instantiate or execute the machine readable instructions to generate an adjacency matrix for different functional blocks to be implemented in an integrated circuit, the adjacency matrix defining connections between ones of the functional blocks, and determine a group of the functional blocks to be included in a first chiplet of a plurality of chiplets for the integrated circuit, the group of the functional blocks determined based on weights assigned to the connections defined in the adjacency matrix.

## Description

### FIELD OF THE DISCLOSURE

This disclosure relates generally to semiconductor device fabrication and, more particularly, to methods and apparatus for disaggregation of semiconductor dies in an integrated circuit package.

### BACKGROUND

Semiconductor device fabrication includes various processes to manufacture semiconductor dies that include integrated circuits or chips. For example, many processes involved in semiconductor device fabrication involve the use of photolithography, which involves the application of light onto a layer of light-sensitive material (e.g., a photoresist, also sometimes referred to simply as a resist) in a controlled manner to produce a pattern in the layer of material in which portions of the layer of material are retained while other portions are removed. The efficiency of such processes has a significant effect on the costs associated therewith.

### BRIEF DESCRIPTION OF THE DRAWINGS

FIG. 1 is a top view of a wafer including dies constructed in accordance with teachings disclosed herein.
FIG. 2 is a schematic representation of a photolithography mask field utilization associated with an example semiconductor die.
FIG. 3 is a schematic representation of example fabrication of a plurality of the example semiconductor die of FIG. 2.
FIG. 4 is a schematic representation of a photolithography mask field utilization associated with another example semiconductor die in accordance with examples herein.
FIG. 5 is a schematic representation of example fabrication of a plurality of the second example semiconductor die of FIG. 4 in accordance with examples herein.
FIG. 6 is a block diagram of example disaggregation facilitation circuitry to determine layouts for the semiconductor dies of FIG. 1 to facilitate fabrication and disaggregation.
FIG. 7A is an example schematic representation of example interconnected functional blocks determined by the example disaggregation facilitation circuitry of FIG. 6 in accordance with the examples disclosed herein.
FIG. 7B is another example schematic representation of example interconnected functional blocks determined by the example disaggregation facilitation circuitry of FIG. 6 in accordance with the examples disclosed herein.
FIG. 7C is another example schematic representation of example interconnected functional blocks determined by the example disaggregation facilitation circuitry of FIG. 6 in accordance with the examples disclosed herein.
FIG. 7D is another example schematic representation of example interconnected functional blocks determined by the example disaggregation facilitation circuitry of FIG. 6 in accordance with the examples disclosed herein.
FIG. 8 is a flowchart representative of example machine readable instructions and/or example operations that may be executed, instantiated, and/or performed by example programmable circuitry to implement the disaggregation facilitation circuitry of FIG. 6.
FIG. 9 is a block diagram of an example processing platform including programmable circuitry structured to execute, instantiate, and/or perform the example machine readable instructions and/or perform the example operations of FIG. 8 to implement the disaggregation facilitation circuitry of FIG. 6.
FIG. 10 is a block diagram of an example implementation of the programmable circuitry of FIG. 9.
FIG. 11 is a block diagram of another example implementation of the programmable circuitry of FIG. 9.

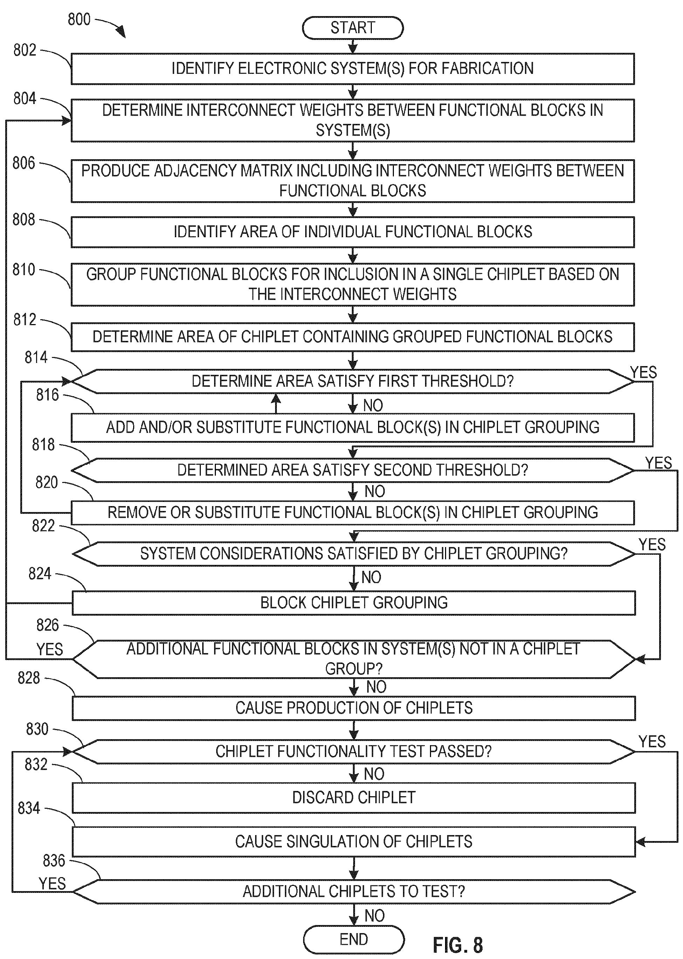

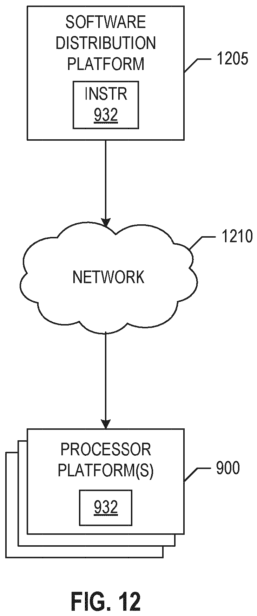

FIG. 12 is a block diagram of an example software/firmware/instructions distribution platform (e.g., one or more servers) to distribute software, instructions, and/or firmware (e.g., corresponding to the example machine readable instructions of FIG. 8) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

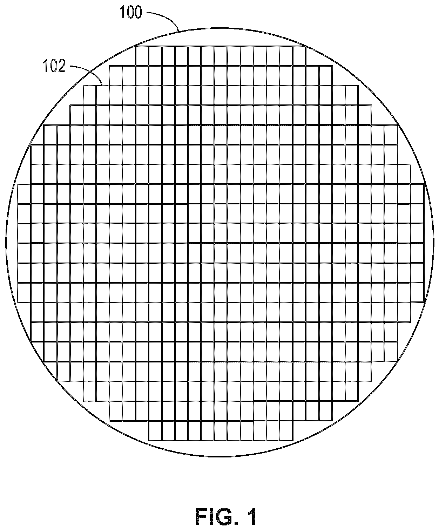

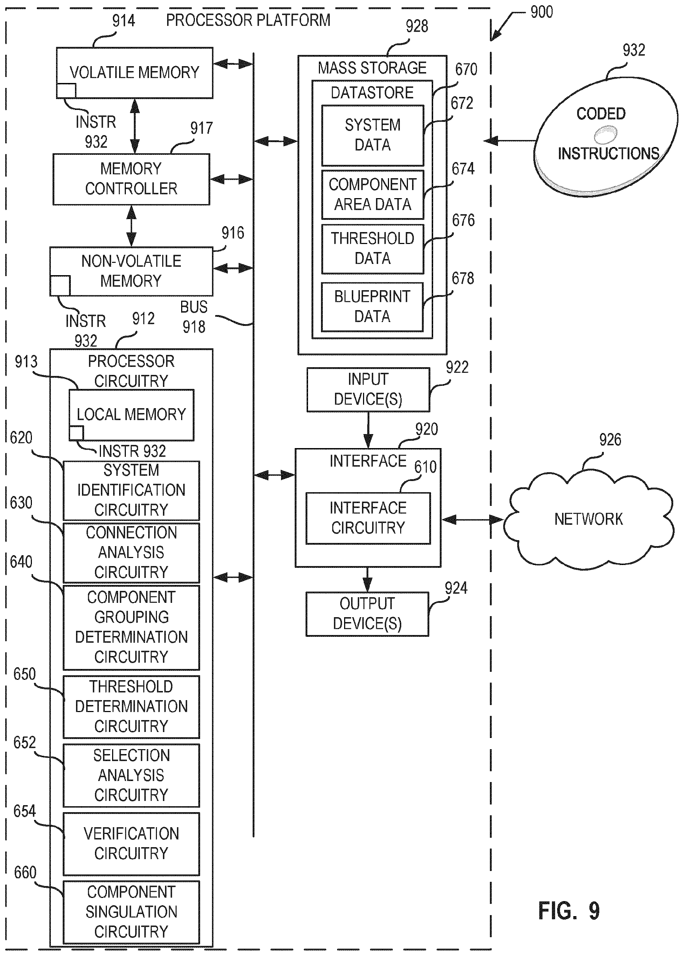

FIG. 1 is a top view of a wafer 100 and semiconductor dies 102 to be disaggregated into chiplets (also sometimes referred to as tiles or fublets) in accordance with examples disclosed herein. The disaggregated chiplets are subsequently incorporated into an IC package. The wafer 100 may be composed of semiconductor material (e.g., silicon) and may include a plurality of the dies 102 having circuitry. The dies 102 may include one or more transistors, supporting circuitry to route electrical signals to the transistors, passive components (e.g., traces, resistors, capacitors, inductors, and/or other circuitry), and/or any other components, which form "functional blocks" in the die 102. As used herein, a "functional block" is an arrangement or layout of transistors that provides some particular function that can be repeated or reused in constructing an integrated circuit. Accordingly, each "functional block" provides a specific function, such as storing information, facilitating communication between chipsets (e.g., a Universal Chiplet Interconnect Express (UCle)), facilitating communication between a computing core and memory, etc. Example functional blocks include a memory device (e.g., cache, a random access memory (RAM) device, such as a static RAM (SRAM) device, a magnetic RAM (MRAM) device, a resistive RAM (RRAM) device, a conductive-bridging RAM (CBRAM) device, etc.), memory interface circuitry (e.g., double data rate (DDR) memory interfaces), input-output (I/O) circuitry (e.g., Peripheral Component Inter Connect (PCI), Small Computer System Interface (SCSI), Universal Serial Bus (USB)), controllers, microprocessors, Digital Signal Processors (DSPs), Central Processor Units (CPUs), Graphics Processor Units (GPUs), programmed microprocessors, Field Programmable Gate Arrays (FPGAs), Application Specific Integrated Circuits (ASICs), Reduced Instruction Set Computers (RISCs), and/or any other circuitry to form part of and provide a specified function within an electronic system. Such functional block(s) are sometimes referred to as intellectual property (IP) blocks. Multiple ones of these functional blocks (e.g., IP blocks) may be combined on a single die 102. For example, a memory array formed by multiple memory circuits may be formed on a same die 102 as programmable circuitry (e.g., the processor circuitry 902 of FIG. 9) or other logic circuitry. Such memory may store information for use by the programmable circuitry or by programmable circuitry formed on a separate die. After the fabrication of the semiconductor product is complete, the wafer 100 may undergo a singulation process in which the dies 102 are separated from one another to provide discrete "chips." In some examples, a functional block is a "hard" functional block (e.g., hard IP), which has a set layout and is silicon verified (e.g., structure is readily known and available to be built on a wafer). In some examples, a functional block is a "soft" functional block (e.g., soft IP) that is functionally verified (e.g., with register transfer level (RTL) codes) and leaves room for different syntheses (e.g., logical synthesis, physical synthesis, clock tree synthesis, etc.) to reach power and performance targets.

In some instances, such chips can be monolithically produced on a single die and correspond to a fully functional system (e.g., a system on a chip (SoC)). However, such monolithic dies are usually relatively large, which leads the dies to be more prone to containing a defect. For instance, processor nodes can be associated with certain defect densities (e.g., 0.1 defects per centimeter square (cm²)). With such defect densities, the larger the chip is, the more likely that the chip will contain a defect that may render the chip unusable, thereby reducing the overall yield in manufacturing such monolithic dies. To increase yields, rather than manufacturing monolithic dies, such dies can be disaggregated and manufactured as multiple smaller dies or sub-dies (e.g., chiplets or tiles) that perform different functions (e.g., different function blocks) included in the monolithic die. Although a smaller die can be made to correspond to an individual functional block, an entire wafer of these smaller dies may not be efficient or profitable. For example, when a system is in early development stages or is designed for small volume usage, the developer does not want to pay for production of an entire wafer of dies when a smaller number of chips are desired.

Discrete chiplets that implement one or more functional blocks can then combined (e.g., electrically interconnected) with other chiplets and/or incorporated into a larger system to achieve the same functionality as a much larger monolithic die. As a result, the chiplets produced in accordance with the examples disclosed herein enable production of a system with a reduced likelihood of the system containing a defect (e.g., which can be seen with production of larger dies) while also minimizing or otherwise reducing production costs (e.g., which can be incurred with the production of smaller dies).

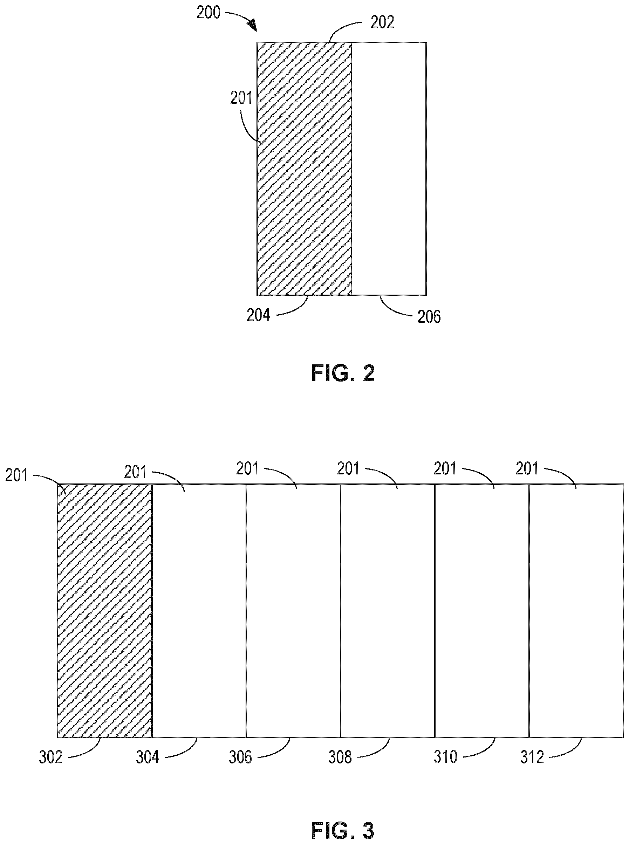

FIG. 2 is a schematic representation of a photolithography mask field utilization 200 associated with one or more example semiconductor dies 201. Photolithography mask field utilization corresponds to a percentage of an area of a reticle (e.g., a photomask) with which one or more semiconductor dies (e.g., the die 102) aligns when the die(s) undergo photolithography to produce a pattern on the substrate. Specifically, a reticle (e.g., a photomask) utilized in photolithography has a preset size (e.g., at 33 millimeters (mm) by 26 mm, etc.). This preset size defines the upper limit on the size of a die. One or more dies can be aligned with (e.g., positioned under) at least a portion of the reticle area for exposure to light in a pattern associated with the particular circuitry component(s) being fabricated on the die(s). While it is theoretically possible to manufacture a die with a size as big as the reticle, when die(s) are manufactured smaller than this upper limit (which is often the case), it is possible for less than all of the area of the reticle to be utilized. Leaving a significant portion of the reticle unutilized results in more light exposure events being performed to pattern the substrate, which increases the production time associated with the wafer. Additionally, leaving a significant portion of the reticle unutilized increases costs associated with utilization of resources to perform photolithography. For instance, there are costs associated with utilization of the photolithography equipment for a longer duration to perform additional light exposure or patterning events to fabricate the area of the wafer. Moreover, utilizing photolithography equipment on one wafer for an extended duration prevents the equipment from being available to pattern another wafer such that the production time of the other wafer is delayed. Accordingly, the delays associated with underutilization of the reticle can propagate to subsequent wafers. Additionally, each light exposure event comes with an energy cost such that utilizing additional light exposure events to fill the wafer increases the cost of fabricating the wafer.

In the illustrated example of FIG. 2, a reticle area 202 includes a first portion 204 that aligns with the die(s) 201, which are exposed to light in accordance with a pattern provided by the reticle. In this example, the first portion 204 is approximately 51% of an area of the reticle area 202. The reticle area 202 also includes a second portion 206 that does not align with (e.g., extends outside of) an area of the die(s) 201. Inasmuch as the first portion 204 (associated with the die(s) 201 to be patterned) covered more than half the reticle area 202 (e.g., 51%), it is not possible to fit the die(s) 201 within the reticle area 202 a second time. As such, the second portion 206 of the reticle area 202 is left unutilized by the die(s) 201. In this example, the second portion 206 is approximately 49% of the reticle area 202. As a result, the semiconductor die(s) 201 associated with the photolithography mask field utilization 200 of FIG. 2 result in a mask field utilization of 51%.

FIG. 3 is a schematic representation of a quantity of light exposure events (e.g., photolithography events) utilized to produce a plurality of the example semiconductor die(s) 201 associated with the photolithography mask field utilization 200 of FIG. 2. In the illustrated example of FIG. 3, a first light exposure operation 302 (e.g., a photolithography operation) patterns a first one of the example semiconductor die(s) 201. A second light exposure operation 304 patterns a second one of the example semiconductor die(s) 201. A third light exposure operation 306 patterns a third one of the example semiconductor die(s) 201. A fourth light exposure operation 308 patterns a fourth one of the example semiconductor die(s) 201. A fifth light exposure operation 310 patterns a fifth one of the example semiconductor die(s) 201. A sixth photolithography operation 312 patterns a sixth one of the example semiconductor die(s) 201. As such, six light exposure operations pattern a first area of a wafer (e.g., the wafer 100 of FIG. 1) for production.

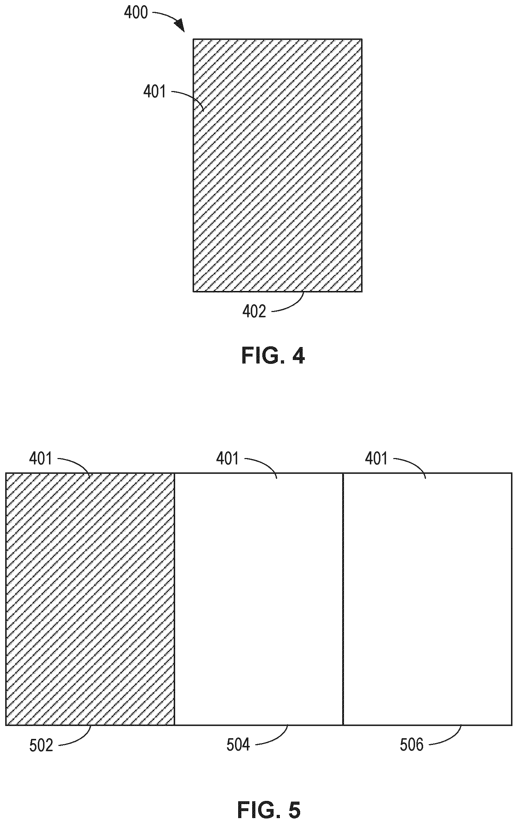

FIG. 4 is a schematic representation of a mask field utilization 400 associated with another example one or more semiconductor dies 401. In the illustrated example of FIG. 4, 100% of an area of the semiconductor die(s) 401 aligns with a reticle area 402 and is to be exposed to light in accordance with a pattern provided by the reticle. As a result, the semiconductor die(s) 401 associated with the photolithography mask field utilization 400 of FIG. 4 result in a mask field utilization of 100%.

FIG. 5 is a schematic representation of a quantity of light exposure operations utilized to produce a plurality of the example semiconductor die(s) 401 of FIG. 4. In the illustrated example of FIG. 5, a first light exposure operation 502 patterns a first one of the semiconductor die(s) 401. A second light exposure operation 504 patterns a second one of the semiconductor die(s) 501. A third light exposure operation 506 patterns a third one of the semiconductor die(s) 501. As such, in this example, three light exposure operations pattern the first area of a wafer (e.g., the wafer 100 of FIG. 1) for production. That is, three of the semiconductor die(s) 401 of FIG. 5 occupy approximately a same area on a wafer as six of the semiconductor die(s) 201 patterned in FIG. 3. Thus, the area of the wafer occupied by three of the semiconductor die(s) 401 is patterned with half of the light exposure events and, thus, in half the time that it takes to pattern the same area of the wafer when the wafer includes the semiconductor die(s) 201 of FIGS. 2 and 3.

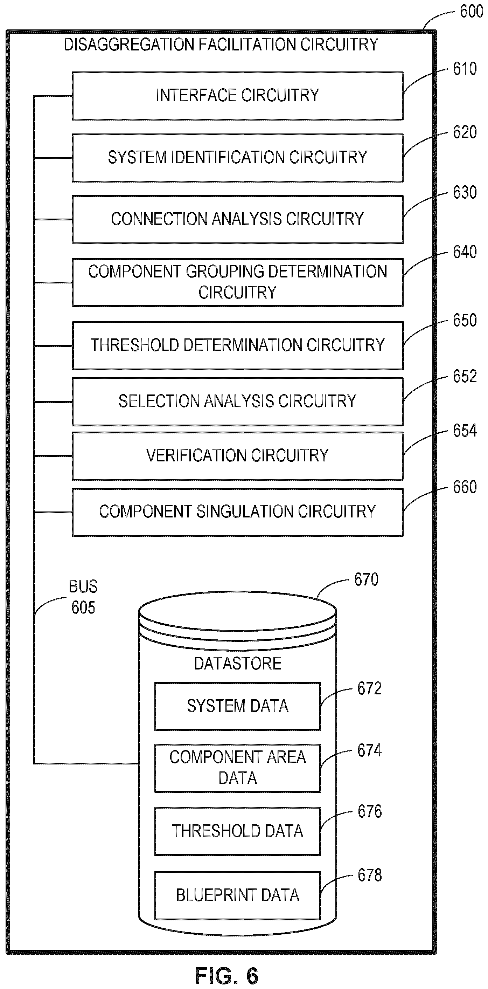

FIG. 6 is a block diagram of an example implementation of disaggregation facilitation circuitry 600 to facilitate fabrication and disaggregation of the functional blocks in the semiconductor dies 102 on the wafer 100 of FIG. 1. For example, the disaggregation facilitation circuitry 600 determines functional block layouts (e.g., a positional arrangement of the functional blocks in a die) for the semiconductor dies 102 of FIG. 1 to enable efficient utilization of a reticle and, in turn, enable fabrication to be flexible and cost efficient for systems that are not fabricated in bulk. For example, electronic systems that are intended to be utilized for internal testing and development may not provide enough value to constitute fabrication of an entire wafer of dies containing the system. The disaggregation facilitation circuitry 600 enables fabrication to result in efficient production of chiplets that implement one or more individual functional blocks of the system, which can then be utilized in other systems that share one or more of the same functional blocks. For example, two or more separate systems that may not be ordered in a high enough quantity individually to enable production on the wafer as monolithic dies to be cost efficient. However, the separate systems may utilize similar functional blocks that can be disaggregated and fabricated as separate chiplets that may be used in each of the separate systems. As a result, the production of the disaggregated functional blocks common to the separate systems may amount to an overall quantity of chiplets high enough to enable fabrication in an efficient manner so that such fabrication is profitable.

The disaggregation facilitation circuitry 600 of FIG. 6 may be instantiated (e.g., creating an instance of, bring into being for any length of time, materialize, implement, etc.) by programmable circuitry such as a Central Processor Unit (CPU) executing first instructions. Additionally or alternatively, the disaggregation facilitation circuitry 600 of FIG. 6 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

In the illustrated example of FIG. 6, the disaggregation facilitation circuitry 600 includes a bus 605, interface circuitry 610, system identification circuitry 620, connection analysis circuitry 630, component grouping determination circuitry 640, threshold determination circuitry 650, selection analysis circuitry 652, verification circuitry 654, component singulation circuitry 660, and a datastore 670. The datastore 670 includes system data 672, component area data 674, threshold data 676, and layout data 678. The interface circuitry 610, the system identification circuitry 620, the connection analysis circuitry 630, the component grouping determination circuitry 640, the threshold determination circuitry 650, the component singulation circuitry 660, and the datastore 670 are communicatively coupled to the bus 605. The bus 605 can be implemented by at least one of an Inter-Integrated Circuit (I2C) bus, a Serial Peripheral Interface (SPI) bus, a Peripheral Component Interconnect (PCI) bus, or a Peripheral Component Interconnect Express (PCIe) bus.

The disaggregation facilitation circuitry 600 of FIG. 6 includes the interface circuitry 610 to facilitate communications between the disaggregation facilitation circuitry 600 and other systems, such as a network, one or more fabrication tools, a user interface, and/or any other system. For example, the interface circuitry 610 can receive information indicative of one or more electronic systems to be fabricated from the user interface and/or the network. Additionally, the interface circuitry 610 can transmit information associated with one or more determined die layouts to the fabrication tools to cause production of semiconductor dies in accordance therewith. The interface circuitry 610 can be representative of and/or otherwise implement one or more interfaces. For example, the interface circuitry 114 can be implemented by a communication device (e.g., a network interface card (NIC), a smart NIC, an Infrastructure Processing Unit (IPU), etc.) such as a transmitter, a receiver, a transceiver, a modem, a residential gateway, a wireless access point, and/or a network interface to facilitate exchange of data with external machines (e.g., computing devices of any kind) via a network. In some examples, the communication is effectuated via an Ethernet connection, a digital subscriber line (DSL) connection, a telephone line connection, a coaxial cable system, a satellite system, a beyond line-of-site wireless system, a line-of-site wireless system, a cellular telephone system, etc. For example, the interface circuitry 610 can be implemented by any type of interface standard, such as a wireless fidelity (Wi-Fi) interface, an Ethernet interface, a universal serial bus (USB), a Bluetooth interface, a near field communication (NFC) interface, a PCI interface, and/or a PCIe interface.

The disaggregation facilitation circuitry 600 of FIG. 6 includes the system identification circuitry 620 to identify an electronic system(s) to be fabricated on the wafer 100 of FIG. 1. In some examples, the system identification circuitry 620 identifies features associated with the electronic system(s) to be fabricated as disaggregated chiplets for the system(s). In some examples, the system identification circuitry 620 determines the functional blocks that support the identified features and represents a design of the system in a block diagram including data and a control flow chart. In some examples, the system identification circuitry 620 collects IP blocks to build the functional blocks. In such examples, when the IP blocks are missing some functionality of the system, the system identification circuitry 620 causes the interface circuitry 610 to prompt a user to develop new IP blocks for the missing functionality. In some examples, the system identification circuitry 620 identifies the functional blocks based on the system data 672 in the datastore 670. For example, the system data 672 can include data indicative of functional blocks for respective electronic systems, and the system identification circuitry 620 can identify the functional blocks in response to identifying the electronic system(s) to be fabricated. In some examples, when the system(s) include multiple of the same functional block, the system identification circuitry 620 identifies enumerated versions of the functional block. For example, if a system has three caches, the system identification circuitry 620 can separately identify a first cache, a second cache, and a third cache. In some examples, the system identification circuitry 620 identifies interfaces between the functional blocks. For example, the system identification circuitry 620 can identify a layout of communication channels between the functional blocks and parameters associated with such channels (e.g., a communication channel capacity). In some examples, the system identification circuitry 620 identifies the electronic system(s) and/or the functional blocks associated therewith based on an input that the interface circuitry 610 receives.

In some examples, the system identification circuitry 620 identifies an area of the individual functional blocks of the system(s). Additionally or alternatively, the system identification circuitry 620 can identify an area associated with interconnections between the functional blocks. For example, the system identification circuitry 620 can identify the area for the respective functional blocks and/or the interconnections based on the component area data 674 in the datastore 670. The component area data 674 can include predetermined areas for the respective functional blocks and/or predetermined areas for respective interconnections. For example, the component area data 674 can include a quantity of transistors per unit of area for the respective functional blocks. In such examples, the system identification circuitry 620 can compute the area for the respective functional blocks based on the identified quantity of transistors per unit of area and a quantity of transistors in the functional block. In some examples, the system identification circuitry 620 is instantiated by programmable circuitry executing system identification instructions and/or configured to perform operations such as those represented by the flowchart of FIG. 8.

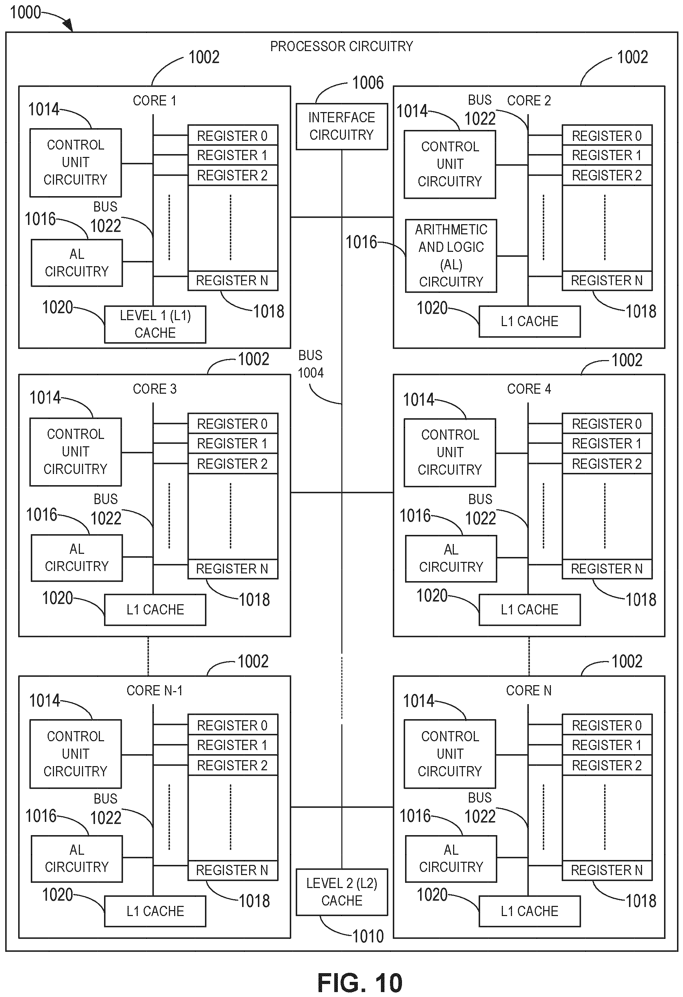

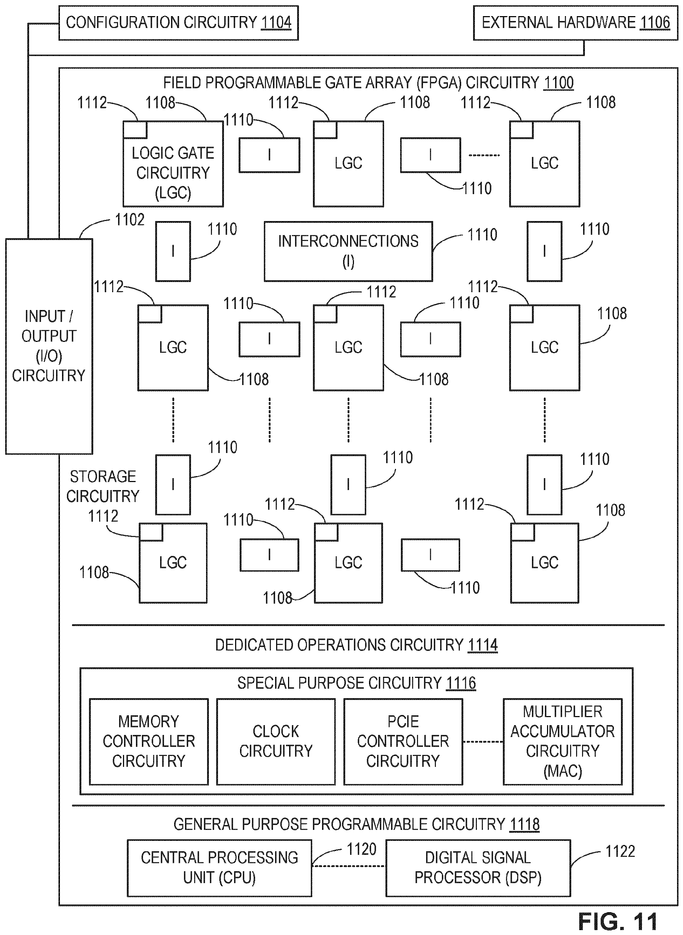

In some examples, the disaggregation facilitation circuitry 600 includes means for identifying functional blocks to be fabricated. For example, the means for identifying may be implemented by the system identification circuitry 620. In some examples, the system identification circuitry 620 may be instantiated by programmable circuitry such as the example programmable circuitry 912 of FIG. 9. For instance, the system identification circuitry 620 may be instantiated by the example microprocessor 1000 of FIG. 10 executing machine executable instructions such as those implemented by at least blocks 802, 804, and/or 808 of FIG. 8. In some examples, the system identification circuitry 620 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the system identification circuitry 620 may be instantiated by any other combination of hardware, software, and/or firmware. For example, the system identification circuitry 620 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The disaggregation facilitation circuitry 600 of FIG. 6 includes the connection analysis circuitry 630 to determine weights associated with interconnects between the functional blocks in the electronic system(s) to be fabricated on a chiplet (e.g., a chiplet corresponding to a portion of the monolithic die 102). For example, the interconnect weight can correspond to a communication channel capacity (e.g., a quantity of bits communicated per second (bps), a bandwidth) to be associated with the different communication channels in the system(s) that connect the functional blocks. In some examples, the connection analysis circuitry 630 identifies a layout of the interconnect channels or interfaces between the functional blocks. In some examples, the connection analysis circuitry 630 produces the adjacency matrix. In such examples, the connection analysis circuitry 630 maps connections between the functional blocks in the system(s). Further, the connection analysis circuitry 630 associates the interconnect weights with the respective connections between the functional blocks. For example, a first functional block can be in connection with a second functional block and a third functional block, and the connection analysis circuitry 630 can generate a matrix that indicates the respective connections between (i) the first and second functional blocks and (ii) the first and third functional blocks. Moreover, the connection analysis circuitry 630 can include the interconnect weights associated with the respective connections in the matrix. In some examples, the connection analysis circuitry 630 is instantiated by programmable circuitry executing connection analysis instructions and/or configured to perform operations such as those represented by the flowchart of FIG. 8.

In some examples, the disaggregation facilitation circuitry 600 includes means for producing an adjacency matrix including interconnect weights between functional blocks in an electronic system. For example, the means for producing may be implemented by the connection analysis circuitry 630. In some examples, the connection analysis circuitry 630 may be instantiated by programmable circuitry such as the example programmable circuitry 912 of FIG. 9. For instance, the connection analysis circuitry 630 may be instantiated by the example microprocessor 1000 of FIG. 10 executing machine executable instructions such as those implemented by at least block 806 of FIG. 8. In some examples, the connection analysis circuitry 630 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the connection analysis circuitry 630 may be instantiated by any other combination of hardware, software, and/or firmware. For example, the connection analysis circuitry 630 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The disaggregation circuitry of FIG. 6 includes the component grouping determination circuitry 640 to determine respective groups (e.g., a unit, a subset, a collection, etc.) of the identified functional blocks to be included in a same chiplet. For example, the component grouping determination circuitry 640 can determine the groups based on interconnect parameters (e.g., a layout of the interconnects, the interconnect weights), the area of the individual functional blocks, and an area of the reticle to be utilized for fabrication. For example, the component grouping determination circuitry 640 can determine the groups of the functional blocks to undergo photolithography at a same time (e.g., to be aligned within the exposure field of a reticle for a same light exposure event) based on the adjacency matrix. The grouped functional blocks are to be positioned in a same chiplet. In some examples, the component grouping determination circuitry 640 identifies subsets based on branches of interconnected functional blocks in the adjacency matrix. In some examples, the component grouping determination circuitry 640 identifies a maximum spanning tree in the adjacency matrix to determine the functional blocks to be grouped together. For example, the component grouping determination circuitry 640 can identify a subset of the functional blocks to be grouped together based on the weights associated with the interconnects that connect the functional blocks that make up edges in the system without any cycles (e.g., loops) to connect the functional blocks in the subset and with a maximum possible average weight per connection in the subset. In some examples, the component grouping determination circuitry 640 groups the functional blocks based on respective sizes of the functional blocks. In some examples, the component grouping determination circuitry 640 identifies a starting functional block for the maximum spanning tree based on a quantity of interfaces that the functional blocks have excluding power supply, control, and clocks. The starting functional block can correspond to the functional block that has the largest quantity of interfaces. In some examples, when there is a tie with more than one functional block in the group associated with the largest quantity of interfaces, the component grouping determination circuitry 640 combines the functional blocks together as the starting point when their sizes enable them to fit in the same reticle exposure field. In some examples, when there is a tie with more than one functional block in the group associated with the largest quantity of interfaces, the component grouping determination circuitry 640 sets each as a starting point for a different maximum spanning tree and builds respective chipsets off of each.

In the illustrated example of FIG. 6, the component grouping determination circuitry 640 determines an area of the grouped functional blocks. For example, the component grouping determination circuitry 640 can determine the area of the grouped functional blocks based on a sum of the area of the individual functional blocks in the group and the interconnect parameters. Further, the component grouping determination circuitry 640 determines whether the area is within a threshold area range identified by the threshold determination circuitry 650, as described in further detail below. When the area is not within the threshold area range, the component grouping determination circuitry 640 can add, remove, and/or substitute one or more functional blocks in the group with one or more functional blocks of the electronic system(s) yet to be assigned to a die grouping for fabrication. In some examples, the component grouping determination circuitry 640 is instantiated by programmable circuitry executing component grouping determination instructions and/or configured to perform operations such as those represented by the flowchart of FIG. 8.

In some examples, the disaggregation facilitation circuitry 600 includes the threshold determination circuitry 650 to determine the threshold area range based on an area of the reticle to be utilized for photolithography during fabrication of the dies 102 on the wafer 100. In some examples, the threshold determination circuitry 650 determines a first area threshold (e.g., a minimum area associated with the threshold range) based on the area of the reticle. In such examples, the threshold determination circuitry 650 sets the first threshold based on a minimum area that the grouped functional blocks can occupy while having at least a threshold photolithography mask field utilization (e.g., 80%, 90%, etc.). In some examples, the threshold determination circuitry 650 sets the first threshold based on an aspect ratio (e.g., ratio of width to height) of the reticle. For example, the threshold determination circuitry 650 can set a height threshold to at least 90% of the reticle exposure field height and a width threshold to at least 90% of the reticle exposure field width. For example, the threshold determination circuitry 650 can determine a die size and an arrangement of dies to be aligned with the reticle. More particularly, when the reticle has a size of 33 mm by 26 mm (e.g., total reticle area of 858 mm²), the threshold determination circuitry 650 can determine that a 2 by 3 arrangement of 12 mm by 10 mm dies (e.g., individual chiplet area of 120 mm²) enables the dies to align with at least the threshold photolithography mask field utilization (e.g., 120 mm² × 2 × 3 = 720 mm², which is over 83% of the total reticle area of 858 mm²). In such examples, the threshold determination circuitry 650 determines the first threshold is 120 mm². Additionally, the threshold determination circuitry 650 can determine that the 2 by 3 arrangement of the 12 mm by 10 mm dies provides a height of 30 mm (e.g., 91% of the 33 mm height of the reticle) and a width of 24 mm (e.g., 92% of the 26 mm height of the reticle. In such examples, the threshold determination circuitry 650 determines the first threshold is at least 90% of the height and width of the reticle being occupied by the dies.

In some examples, the threshold determination circuitry 650 sets a second area threshold (e.g., a maximum area associated with the threshold range) based on a maximum area that the grouped functional blocks can occupy and/or a maximum aspect ratio that the grouped functional blocks can have while having at least the threshold photolithography mask field utilization. For example, when the reticle has a size of 33 mm by 26 mm, the threshold determination circuitry 650 can determine that a 2 by 2 of 12 mm by 15 mm dies (e.g., individual chiplet area of 180 mm²) enables the dies to align with at least the threshold photolithography mask field utilization (e.g., 180 mm² × 2 × 2 = 720 mm², which is over 83% of the total reticle area of 858 mm²) and have at least the threshold height and width associated with the reticle. In such examples, the threshold determination circuitry 650 determines the second threshold is 180 mm². In some examples, the first threshold and the second threshold are predetermined for respective reticle sizes and stored in the threshold data 676 in the datastore 670. In some examples, the threshold determination circuitry 650 determines the first threshold and the second threshold based on a yield threshold associated with production of the electronic system(s). In some examples, the threshold determination circuitry 650 determines the first threshold and the second threshold based on a yield threshold of at least 80% (e.g., at least 80% of the fabricated dies 102 do not include a defect) and an assumption that fabrication will produce less than or equal to 0.1 defects per centimeter square (cm²). For example, a die area at the first threshold results in one defect per eight of the dies 102, which provides a yield of 88%, and a die area at the second threshold results in one defect per five of the dies 102, which provides a yield of 83%. As the first threshold provides a higher yield, the threshold determination circuitry 650 can indicate to the component grouping determination circuitry 640 that a die area closer to the first threshold than the second threshold is advantageous, which causes the component grouping determination circuitry 640 to aim for a die area approximately equivalent to the first threshold when grouping the functional blocks. Although a smaller die can be made to correspond to an individual functional block, an entire wafer of these smaller dies may not be efficient or profitable. For example, when a system is in early development stages or is designed for small volume usage, the developer does not want to pay for production of an entire wafer of dies when a smaller number of chips are desired. In some examples, the threshold determination circuitry 650 is instantiated by programmable circuitry executing threshold determination instructions and/or configured to perform operations such as those represented by the flowchart of FIG. 8.

Accordingly, the component grouping determination circuitry 640 determines whether the area of the grouped functional blocks satisfies the threshold area range (e.g., is greater than or equal to the first threshold area and less than or equal to the second threshold area) and/or the height and width of the grouped functional blocks satisfy threshold ranges associated with the aspect ratio of the reticle (e.g., the height is greater than or equal to the first height threshold and less than or equal to the second height threshold, the width is greater than or equal to the first width threshold and less than or equal to the second width threshold). When the area of the grouped functional blocks satisfies the threshold area range and/or the height and width of the grouped functional blocks satisfy the threshold ranges associated with the aspect ratio of the reticle, the component grouping determination circuitry 640 determines that the area of the chiplet enables multiple instances of the chiplet to be arranged within the area of the reticle so as to occupy at least 80% of the area of the reticle. In some examples, when the area of the grouped functional blocks satisfies the threshold area range, the component grouping determination circuitry 640 stores data indicative of the determined group of functional blocks in the die in the layout data 678 in the datastore 670. In some examples, the component grouping determination circuitry 640 determines a layout of the functional blocks that satisfies the threshold area. In such examples, the component grouping determination circuitry 640 stores the layout of the functional blocks in the layout data 678. In some examples, after identifying the group of functional blocks to be fabricated in a die, the system identification circuitry 620 determines whether there are additional functional blocks in the system(s) that are yet to be assigned to a die grouping for fabrication.

In some examples, the component grouping determination circuitry 640 identifies one or more functional blocks of the electronic system that are not included in the determined group of functional blocks. In such examples, when the remaining functional block(s) of the electronic system does not satisfy (e.g., are less than, are less than or equal to) a remainder threshold (e.g., 50 mm²), the component grouping determination circuitry 640 determines that the remaining functional block(s) are to be included in a same chiplet as the determined group of functional blocks as the performance benefits may outweigh the mask field utilization benefits provided by the determined group of functional blocks. For example, if (i) there are N branches of functional blocks defined in an electronic system for the maximum spanning tree and (ii) N-1 branches satisfy the threshold area range, the component grouping determination circuitry 640 determines that the Nth branch is to be included with the rest of the electronic system in the chiplet grouping when an area of the Nth branch does not satisfy the remainder threshold.

In some examples, the component grouping determination circuitry 640 identifies an area of a testing facilitation functional block associated with the electronic system. In some such examples, the component grouping determination circuitry 640 when the area of the testing facilitation functional block plus the area of the grouped functional blocks satisfies the threshold area range, the component grouping determination circuitry 640 adds the testing facilitation functional block to the chiplet with the grouped functional blocks. In some examples, even when the testing facilitation functional block has a small area that can be added to the area of the grouped functional blocks and satisfy the threshold area range, the component grouping determination circuitry 640 determines that the testing facilitation functional block is to be generated in a separate chiplet.

In some examples, the disaggregation facilitation circuitry 600 includes means for determining a group of functional blocks of at least one electronic system to be included in a same chiplet. For example, the means for determining a group of functional blocks may be implemented by the component grouping determination circuitry 640. In some examples, the component grouping determination circuitry 640 may be instantiated by programmable circuitry such as the example programmable circuitry 912 of FIG. 9. For instance, the component grouping determination circuitry 640 may be instantiated by the example microprocessor 1000 of FIG. 10 executing machine executable instructions such as those implemented by at least blocks 810, 812, 814, 816, 818, and/or 820 of FIG. 8. In some examples, the component grouping determination circuitry 640 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the component grouping determination circuitry 640 may be instantiated by any other combination of hardware, software, and/or firmware. For example, the component grouping determination circuitry 640 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the disaggregation facilitation circuitry 600 includes means for determining area thresholds for chiplets. For example, the means for determining area thresholds may be implemented by threshold determination circuitry 650. In some examples, the threshold determination circuitry 650 may be instantiated by programmable circuitry such as the example programmable circuitry 912 of FIG. 9. For instance, the threshold determination circuitry 650 may be instantiated by the example microprocessor 1000 of FIG. 10 executing machine executable instructions such as those implemented by at least blocks 814 and/or 818 of FIG. 8. In some examples, the threshold determination circuitry 650 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the threshold determination circuitry 650 may be instantiated by any other combination of hardware, software, and/or firmware. For example, the threshold determination circuitry 650 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The disaggregation facilitation circuitry 600 includes the selection analysis circuitry 652 to determine whether candidate chiplet groups identified by the component grouping determination circuitry 640 satisfy power and performance specifications, high volume manufacturability, and/or other criteria associated with the electronic system (e.g., the system-in-package (SiP), the multi-chip module (MCM)). In some examples, the selection analysis circuitry 652 identifies the criteria for the electronic system via the system data 672. In some examples, the selection analysis circuitry 652 blocks a chiplet grouping from proceeding to production in response to determining that the chiplet grouping does not meet one or more criteria associated with the system or associated with manufacturability. In some examples, the selection analysis circuitry 652 is instantiated by programmable circuitry executing selection analysis instructions and/or configured to perform operations such as those represented by the flowchart of FIG. 8.

In some examples, the disaggregation facilitation circuitry 600 includes means for analyzing an identified chiplet group. For example, the means for analyzing may be implemented by the selection analysis circuitry 652. In some examples, the selection analysis circuitry 652 may be instantiated by programmable circuitry such as the example programmable circuitry 912 of FIG. 9. For instance, the selection analysis circuitry 652 may be instantiated by the example microprocessor 1000 of FIG. 10 executing machine executable instructions such as those implemented by at least blocks 822 and/or 824 of FIG. 8. In some examples, the selection analysis circuitry 652 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the selection analysis circuitry 652 may be instantiated by any other combination of hardware, software, and/or firmware. For example, the selection analysis circuitry 652 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The disaggregation facilitation circuitry 600 includes the verification circuitry 654 to verify that the groups of functional blocks to be produced as chiplets include all functional blocks to be included in the electronic system. In some examples, the verification circuitry 654 verifies that data and control interconnects associated with the electronic system are included in the chiplets. In some examples, the verification circuitry 654 tests the chiplets to ensure that the chiplets do not contain a defect. For example, the verification circuitry 654 can perform validation of functional blocks and communication channels. In some examples, the verification circuitry 654 is instantiated by programmable circuitry executing verification instructions and/or configured to perform operations such as those represented by the flowchart of FIG. 8.

In some examples, the disaggregation facilitation circuitry 600 includes means for verifying. For example, the means for verifying may be implemented by the verification circuitry 654. In some examples, the verification circuitry 654 may be instantiated by programmable circuitry such as the example programmable circuitry 912 of FIG. 9. For instance, the verification circuitry 654 may be instantiated by the example microprocessor 1000 of FIG. 10 executing machine executable instructions such as those implemented by at least blocks 828 and/or 830 of FIG. 8. In some examples, the verification circuitry 654 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the verification circuitry 654 may be instantiated by any other combination of hardware, software, and/or firmware. For example, the verification circuitry 654 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The disaggregation facilitation circuitry 600 includes the component singulation circuitry 660 to cause singulation of the different chiplets containing the functional blocks from the wafer 100 on which the chiplets are fabricated. The resulting chiplets can undergo further processing (e.g., assembly) to produce the corresponding electronic system(s). The component singulation circuitry 660 can determine how to cut the wafer 100 to obtain the chiplets based on the layout data 678 stored in the datastore 670. In some examples, the component singulation circuitry 660 is instantiated by programmable circuitry executing component singulation instructions and/or configured to perform operations such as those represented by the flowchart of FIG. 8.

In some examples, the disaggregation facilitation circuitry 600 includes means for causing singulation of chiplets. For example, the means for causing singulation may be implemented by the component singulation circuitry 660. In some examples, the component singulation circuitry 660 may be instantiated by programmable circuitry such as the example programmable circuitry 912 of FIG. 9. For instance, the component singulation circuitry 660 may be instantiated by the example microprocessor 1000 of FIG. 10 executing machine executable instructions such as those implemented by at least block 826 of FIG. 8. In some examples, the component singulation circuitry 660 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the component singulation circuitry 660 may be instantiated by any other combination of hardware, software, and/or firmware. For example, the component singulation circuitry 660 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the disaggregation facilitation circuitry 600 of FIG. 1 is illustrated in FIG. 6, one or more of the elements, processes, and/or devices illustrated in FIG. 6 may be combined, divided, re-arranged, omitted, eliminated, and/or implemented in any other way. Further, the example interface circuitry 610, the example system identification circuitry 620, the example connection analysis circuitry 630, the example component grouping determination circuitry 640, the example threshold determination circuitry 650, the example selection analysis circuitry 652, the example verification circuitry 654, the example component singulation circuitry 660, the example datastore 670 including the example system data 672, the example component area data, and the example threshold data 676 and/or, more generally, the example disaggregation facilitation circuitry 600 of FIG. 6, may be implemented by hardware alone or by hardware in combination with software and/or firmware. Thus, for example, any of the example interface circuitry 610, the example system identification circuitry 620, the example connection analysis circuitry 630, the example component grouping determination circuitry 640, the example threshold determination circuitry 650, the example selection analysis circuitry 652, the example verification circuitry 654, the example component singulation circuitry 660, the example datastore 670 including the example system data 672, the example component area data, and the example threshold data 676, and/or, more generally, the example disaggregation facilitation circuitry 600, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example disaggregation facilitation circuitry 600 of FIG. 6 may include one or more elements, processes, and/or devices in addition to, or instead of, those illustrated in FIG. 6, and/or may include more than one of any or all of the illustrated elements, processes and devices.

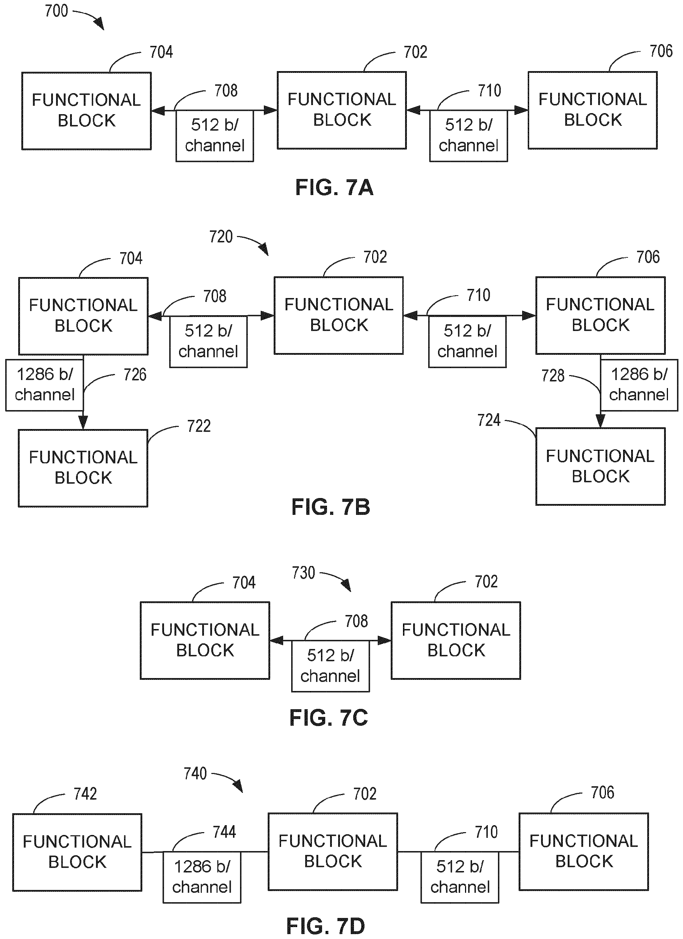

FIG. 7A is a first schematic representation of a first example layout 700 of functional blocks 702, 704, 706 for fabrication in an integrated circuit (e.g., the semiconductor die 102 of FIG. 1) that is to be disaggregated across multiple chiplets determined by the disaggregation facilitation circuitry 600 in accordance with the examples disclosed herein. In the illustrated example of FIG. 7A, the disaggregation facilitation circuitry 600 groups a first functional block 702 with a second functional block 704 and a third functional block 706 for potential fabrication in the same semiconductor die (e.g., same chiplet). In FIG. 7A, the first functional block 702 is connected with the second functional block 704 via a first interconnect 708. Additionally, the first functional block 702 is connected with the third functional block 706 via a second interconnect 710. In this example, the first interconnect 708 and the second interconnect 710 have a same interconnect weight (e.g., 512 bits per clock cycle communicated by the communication channel). For example, the disaggregation facilitation circuitry 600 can group the functional blocks 702, 704, 706 based on a maximum spanning tree in an adjacency matrix of the electronic system(s) to be fabricated. The adjacency matrix for the illustrated example of FIG. 7A is outlined in Table 1 in which the ∞ denotes no connection between the functional blocks.

**Table 1: Adjacency Matrix for the Layout 700 of FIG. 7A**

| | Functional Block 702 | Functional Block 704 | Functional Block 706 |
|---|---|---|---|
| Functional Block 702 | x | 512 bits | 512 bits |
| Functional Block 704 | 512 bits | x | ∞ |
| Functional Block 706 | 512 bits | ∞ | x |

The disaggregation facilitation circuitry 600 creates the adjacency matrix weighted by the number of bits between two blocks communicating with each other. In some examples, the functional blocks 702, 704, 706 are part of a same electronic system. In some such examples, the functional blocks 702, 704, 706 are not directly connected when implemented in the electronic system. For example, a portion of the first interconnect 708 can connect the first functional block 702 to another functional block manufactured in another semiconductor die when the electronic system is assembled (e.g., after fabrication of the semiconductor dies). In such examples, the connection between the first functional block 702 and the other functional block in the electronic system also has the same interconnect weight. In some examples, the functional blocks 702, 704, 706 can be utilized in at least two different electronic systems. Advantageously, the disaggregation facilitation circuitry 600 creates the adjacency matrix with preliminary information as the adjacency matrix narrows down the functional blocks connectivity and eliminates false combinatorial connections to facilitate disaggregation analysis. Additionally, the adjacency matrix indicates a criticality of connections via the number of bits that such connections are utilized to communicate.

FIG. 7B is a schematic representation of a second example layout 720 of functional blocks 702, 704, 706, 722, 724 for fabrication in a semiconductor die (e.g., the semiconductor die 102 of FIG. 1) determined by the disaggregation facilitation circuitry 600 in accordance with the examples disclosed herein. For example, when the disaggregation facilitation circuitry 600 determines that the first, second, and third functional blocks 702, 704, 706 in the first layout 700 have an area that does not satisfy (e.g., is less than) the first area threshold, the disaggregation facilitation circuitry 600 can produce the second layout 720 by adding a fourth functional block 722 and a fifth functional block 724 to the group for fabrication in the same semiconductor die. In this example, the fourth functional block 722 is connected to the second functional block 704 via a third interconnect 726, and the fifth functional block 724 is connected to the third functional block 706 via a fourth interconnect 728. In this example, the third interconnect 726 and the fourth interconnect 728 include a second interconnect weight (e.g., 1286 bits per clock cycle communicated by the communication channel) less than the first interconnect weight. The adjacency matrix for the illustrated example of FIG. 7B is outlined in Table 2.

**Table 2: Adjacency Matrix for the Layout 720 of FIG. 7B**

| | Functional Block 702 | Functional Block 704 | Functional Block 706 | Functional Block 722 | Functional Block 724 |
|---|---|---|---|---|---|
| Functional Block 702 | x | 512 bits | 512 bits | ∞ | ∞ |
| Functional Block 704 | 512 bits | x | ∞ | 1286 bits | ∞ |
| Functional Block 706 | 512 bits | ∞ | x | ∞ | 1286 bits |
| Functional Block 722 | ∞ | ∞ | ∞ | x | ∞ |
| Functional Block 724 | ∞ | ∞ | ∞ | ∞ | x |

FIG. 7C is a schematic representation of a third example layout 730 of the functional blocks 702, 704 for fabrication in a semiconductor die (e.g., the semiconductor die 102 of FIG. 1) determined by the disaggregation facilitation circuitry 600 in accordance with the examples disclosed herein. For example, when the disaggregation facilitation circuitry 600 determines that the first, second, and third functional blocks 702, 704, 706 in the first layout 700 have an area that does not satisfy (e.g., is greater than) the second area threshold, the disaggregation facilitation circuitry 600 can produce the third layout 730 in which the third functional block 706 (FIGS. 7A-7B) has been removed from the semiconductor die to reduce an area associated therewith. The adjacency matrix for the illustrated example of FIG. 7C is outlined in Table 3.

**Table 3: Adjacency Matrix for the Layout 730 of FIG. 7C**

| | Functional Block 702 | Functional Block 704 |
|---|---|---|
| Functional Block 702 | x | 512 bits |
| Functional Block 704 | 512 bits | x |

FIG. 7D is a schematic representation of a fourth example layout 740 of functional blocks 702, 706, 742 for fabrication in a semiconductor die (e.g., the semiconductor die 102 of FIG. 1) determined by the disaggregation facilitation circuitry 600 in accordance with the examples disclosed herein. In this example, a sixth functional block 742 is connected to the first functional block 702 via a fifth interconnect 744. In this example, the fifth interconnect 744 has the second interconnect weight (e.g., 1286 bits per clock cycle communicated by the communication channel). For example, when the disaggregation facilitation circuitry 600 determines that the first, second, and third functional blocks 702, 704, 706 in the first layout 700 have an area that does not satisfy (e.g., is less than) the first area threshold or does not satisfy (e.g., is greater than) the second area threshold, the disaggregation facilitation circuitry 600 can produce the fourth layout 740 in which the second functional block 704 has been substituted for the sixth functional block 742 to adjust an area of the semiconductor die. More particularly, when the disaggregation facilitation circuitry 600 determines that the first, second, and third functional blocks 702, 704, 706 in the first layout 700 have an area that does not satisfy (e.g., is less than) the first area threshold, the disaggregation facilitation circuitry 600 replaces the second functional block 704 with the sixth functional block 742 because the sixth functional block 742 has a greater area than the second functional block. In some examples, the disaggregation facilitation circuitry 600 determines that a difference between the area of the second functional block 704 and the area of the sixth functional block 742 will cause the layout 740 for the semiconductor die to satisfy the first area threshold. Furthermore, when the disaggregation facilitation circuitry 600 determines that the first, second, and third functional blocks 702, 704, 706 in the first layout 700 have an area that does not satisfy (e.g., is greater than) the second area threshold, the disaggregation facilitation circuitry 600 can determine that the sixth functional block 742 is to be substituted for the second functional block 704 of FIG. 7A in response to the difference between the area of the first functional block 704 and the sixth functional block 742 resulting in the layout 740 satisfying the second area threshold. The adjacency matrix for the illustrated example of FIG. 7D is outlined in Table 4.

**Table 4: Adjacency Matrix for the Layout 740 of FIG. 7D**

| | Functional Block 702 | Functional Block 742 | Functional Block 706 |
|---|---|---|---|
| Functional Block 702 | x | 512 bits | 512 bits |
| Functional Block 742 | 512 bits | x | ∞ |
| Functional Block 706 | 512 bits | ∞ | x |

A flowchart representative of example machine readable instructions, which may be executed by programmable circuitry to implement and/or instantiate the disaggregation facilitation circuitry 600 of FIG. 6 and/or representative of example operations which may be performed by programmable circuitry to implement and/or instantiate the disaggregation facilitation circuitry 600 of FIG. 6, is shown in FIG. 8. The machine readable instructions may be one or more executable programs or portion(s) of one or more executable programs for execution by programmable circuitry such as the programmable circuitry 912 shown in the example processor platform 900 discussed below in connection with FIG. 9 and/or may be one or more function(s) or portion(s) of functions to be performed by the example programmable circuitry (e.g., an FPGA) discussed below in connection with FIGS. 10 and/or 11. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIG. 8, many other methods of implementing the example disaggregation facilitation circuitry 600 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 8 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 8 is a flowchart representative of example machine readable instructions and/or example operations 800 that may be executed, instantiated, and/or performed by programmable circuitry to facilitate fabrication and disaggregation of functional blocks across different chiplets fabricated on a wafer (e.g., the wafer 100 of FIG. 1). The example machine-readable instructions and/or the example operations 800 of FIG. 8 begin at block 802, at which the disaggregation facilitation circuitry 600 (FIG. 6) identifies one or more electronic system(s) (e.g., an integrated circuit) for fabrication. For example, the system identification circuitry 620 (FIG. 6) can identify the electronic system(s) for fabrication. In some examples, the system identification circuitry 620 identifies functional blocks associated with the electronic system(s). In some examples, the system identification circuitry 620 identifies the functional blocks based on the system data 672 (FIG. 6) in the datastore 670 (FIG. 6). For example, the system data 672 can include data indicative of functional blocks for respective electronic systems. In some examples, the system identification circuitry 620 identifies the electronic system(s) and/or the functional blocks associated therewith based on an input that the interface circuitry 610 (FIG. 6) receives.

At block 804, the disaggregation facilitation circuitry 600 determines interconnect weights between the functional blocks in the identified system. For example, the connection analysis circuitry 630 (FIG. 6) can identify a communication channel capacity (e.g., a quantity of bits communicated per second (bps), a bandwidth) to be associated with the different communication channels in the system(s) that connect the functional blocks.

At block 806, the disaggregation facilitation circuitry 600 produces an adjacency matrix including the interconnect weights between the functional blocks in the system(s). In some examples, the connection analysis circuitry 630 produces the adjacency matrix. In such examples, the connection analysis circuitry 630 maps connections between the functional blocks in the system(s). Further, the connection analysis circuitry 630 associates the interconnect weights with the respective connections between the functional blocks. For example, a first functional block can be connected with a second functional block and a third functional block, and the connection analysis circuitry 630 can generate a matrix that indicates the respective connections between (i) the first and second functional blocks and (ii) the first and third functional blocks. Moreover, the connection analysis circuitry 630 can indicate the interconnect weights associated with the respective connections in the matrix (e.g., based on the number of bits associated with each connection).

At block 808, the disaggregation facilitation circuitry 600 identifies an area of the individual functional blocks of the system(s). For example, the system identification circuitry 620 can identify the area for the respective functional blocks based on the component area data 674 (FIG. 6) in the datastore 670. The component area data 674 can include predetermined areas for the respective functional blocks. For example, the component area data 674 can include a quantity of transistors per unit of area for the respective functional blocks. In such examples, the system identification circuitry 620 can compute the area for the respective functional blocks based on the identified quantity of transistors per unit of area and a quantity of transistors in the functional block.

At block 810, the disaggregation facilitation circuitry 600 groups the functional blocks for inclusion in a single die (e.g., a single chiplet) based on the interconnect weights. For example, the component grouping determination circuitry 640 (FIG. 6) can determine the groups of the functional blocks to undergo photolithography at a same time (e.g., to be aligned with the reticle for a same light exposure event) based on the adjacency matrix indicating the various connections between the functional blocks and the associated weights of those connections. The grouped functional blocks are to be positioned in a same chiplet. In some examples, the component grouping determination circuitry 640 identifies a maximum spanning tree in the adjacency matrix to determine the functional blocks to be grouped together. In such examples, the component grouping determination circuitry 640 identifies a subset of the functional blocks to be grouped together based on a subset of the interconnects that connect the functional blocks that are edges in the system together without any cycles (e.g., loops) and with a maximum possible average weight per connection in the subset.

At block 812, the disaggregation facilitation circuitry 600 determines an area of the chiplet containing the grouped functional blocks. For example, the component grouping determination circuitry 640 can determine the area of the chiplet containing the grouped functional blocks based on a sum of the area of the individual functional blocks in the group. In some examples, the component grouping determination circuitry 640 determines the area of the chiplet containing the group based on a sum of the area of each individual functional block included in the group as well as the area associated with implementing the communication channels between the functional blocks.

At block 814, the disaggregation facilitation circuitry 600 determines whether the area of the chiplet containing the grouped functional blocks satisfies a first threshold. For example, the component grouping determination circuitry 640 can compare the determined area of the grouped functional blocks to the first threshold. In some examples, the threshold determination circuitry 650 (FIG. 6) determines the first threshold (e.g., an area associated with the first threshold) based on an area of the reticle utilized to pattern the die in which the functional blocks are to be positioned. In such examples, the threshold determination circuitry 650 determines the first threshold based on a minimum area that the chiplet could occupy while having at least a threshold photolithography mask field utilization (e.g., 80%, 90%, etc.). For example, the threshold determination circuitry 650 can determine a die size and an arrangement of dies to be aligned with the reticle. More particularly, when the reticle has a size of 33 mm by 26 mm, the threshold determination circuitry 650 can determine that a 2 by 3 arrangement of 12 mm by 10 mm dies enables the dies to align with at least the threshold photolithography mask field utilization. In such examples, the threshold determination circuitry 650 determines the first threshold is 120 mm². Although examples herein are discussed with reference to a reticle having a size of 33 mm by 26 mm, it should be understood that examples disclosed herein can be applied to other reticle sizes. In some examples, the first threshold is predetermined for respective reticle sizes and stored as threshold data 676 (FIG. 6) in the datastore 670. The component grouping determination circuitry 640 determines whether the area of the chiplet containing the grouped functional blocks satisfies (e.g., is greater than or equal to) the first threshold. When the area of the chiplet satisfies the first threshold, the operations 800 proceed to block 818. Otherwise, when the area of the chiplet does not satisfy the first threshold, the operations 800 proceed to block 816.

At block 816, the disaggregation facilitation circuitry 600 adds and/or substitutes functional blocks in the group. For example, the component grouping determination circuitry 640 can determine the functional blocks to add and/or substitute based on a difference between the area occupied by the group of functional blocks (e.g., the area of the corresponding chiplet) and the first threshold. In some examples, the component grouping determination circuitry 640 determines the functional blocks to add and/or substitute based on an area of one or more other functional blocks in the electronic system(s) to be fabricated that are yet to be grouped with other functional blocks for fabrication. After block 816, the operations 800 return to block 814.

At block 818, the disaggregation facilitation circuitry 600 determines whether the area of the chiplet containing the grouped functional blocks satisfies a second threshold. For example, the component grouping determination circuitry 640 can compare the determined area of the chiplet to the second threshold. In some examples, the threshold determination circuitry 650 determines the second threshold based on a maximum area that the grouped functional blocks could occupy while having at least the threshold photolithography mask field utilization. For example, when the reticle has a size of 33 mm by 26 mm, the threshold determination circuitry 650 can determine that a 2 by 2 of 12 mm by 15 mm dies enables the dies to align with at least the threshold photolithography mask field utilization. In such examples, the threshold determination circuitry determines the second threshold is 180 mm². In some examples, the second threshold is predetermined for respective reticle sizes and stored in the threshold data 676 in the datastore 670. The component grouping determination circuitry 640 determines whether the area of the chiplet containing the grouped functional blocks satisfies (e.g., is less than or equal to) the second threshold. When the area of the chiplet satisfies the second threshold, the area of the chiplet enables multiple instances of the chiplet to be arranged within the area of the reticle so as to occupy at least 80% of the area of the reticle. In some examples, when the area of the chiplet satisfies the second threshold, the component grouping determination circuitry 640 stores data indicative of the layout and identification of the functional blocks in the die in layout data 678 (FIG. 6) in the datastore 670. Further, when the area of the chiplet containing the grouped functional blocks satisfies the second threshold, the operations 800 proceed to block 822. Otherwise, when the area of the grouped functional blocks does not satisfy the first threshold, the operations 800 proceed to block 820.

At block 820, the disaggregation facilitation circuitry 600 removes and/or substitutes functional blocks in the group. For example, the component grouping determination circuitry 640 can determine the functional blocks to remove and/or substitute based on a difference between the area occupied by the chiplet containing the group of functional blocks and the second threshold. In some examples, the component grouping determination circuitry 640 determines the functional blocks to remove and/or substitute based on an area of one or more other functional blocks in the electronic system(s) to be fabricated that are not yet assigned to a group. After block 820, the operations 800 return to block 814.

At block 822, the disaggregation facilitation circuitry 600 determines whether system considerations are satisfied by the chiplet grouping. For example, the selection analysis circuitry 652 (FIG. 6) can determine whether candidate chiplet groups identified by the component grouping determination circuitry 640 will meet power and performance specifications, high volume manufacturability, and/or other criteria associated with the electronic system. In some examples, the selection analysis circuitry 652 identifies the criteria for the electronic system via the system data 672. When the system considerations are satisfied by the determined chiplet grouping, the operations 800 proceed to block 826. Otherwise, when the system considerations are not satisfied by the determined chiplet grouping, the operations 800 proceed to block 824.

At block 824, the disaggregation facilitation circuitry 600 blocks the determined chiplet grouping from proceeding to production. In some examples, the selection analysis circuitry 652 blocks the chiplet grouping in response to determining that the chiplet grouping does not meet one or more criteria associated with the system or associated with manufacturability. In some examples, the selection analysis circuitry 652 stores blocked chiplet groupings in the datastore 670 (e.g., in the system data 672) to prevent the component grouping determination circuitry 640 from reproducing the chiplet grouping.

At block 826, the disaggregation facilitation circuitry 600 determines whether there are additional functional blocks in the electronic system(s) to be produced. For example, the verification circuitry 654 (FIG. 6) can determine whether there are additional functional blocks in the system(s) that are yet to be assigned to a group for fabrication. When there are additional functional blocks to be produced, the operations 800 return to block 804. Otherwise, when each of the functional blocks in the electronic system(s) have been assigned to a die grouping for fabrication, the operations 800 proceed to block 828.

At block 828, the disaggregation facilitation circuitry 600 causes production of the chiplets. For example, the interface circuitry 610 can transmit a signal to one or more fabrication tools to trigger production of the dies on the wafer in accordance with the determined groups of functional blocks. Accordingly, dies on a wafer can encounter photolithography, deposition, etching, doping, and/or other fabrication processes to produce the functional blocks for the chiplets.

At block 830, the disaggregation facilitation circuitry 600 determines whether the produced chiplet passes a chiplet functionality test. For example, the verification circuitry 654 can verify that data and control interconnects associated with the electronic system are included in the chiplets. In some examples, the verification circuitry 654 tests the chiplets to ensure that the chiplets do not contain a defect. For example, the verification circuitry 654 can perform validation of functional blocks and communication channels. When the chiplet passes the functionality test, the operations 800 proceed to block 834. Otherwise, when the chiplet does not pass the functionality test, the operations 800 proceed to block 832.

At block 832, the disaggregation facilitation circuitry 600 discards the chiplet. For example, the verification circuitry 654 can cause the chiplet to be discarded in response to determining that the chiplet contains a defect.

At block 834, the disaggregation facilitation circuitry 600 causes singulation of the chiplets. For example, the component singulation circuitry 660 (FIG. 6) can cause the wafer to be cut to obtain chiplets. As a result, the chiplets can undergo further processing (e.g., assembly) to produce the corresponding electronic system(s). The component singulation circuitry 660 can determine how to cut the dies based on the layout data 678 stored in the datastore 670.

At block 836, the disaggregation facilitation circuitry 600 determines whether there are additional chiplets to test. When there are additional chiplets to test, the operations return to block 830. Otherwise, the operations 800 terminate.

FIG. 9 is a block diagram of an example programmable circuitry platform 900 structured to execute and/or instantiate the example machine-readable instructions and/or the example operations of FIG. 8 to implement the disaggregation facilitation circuitry 600 of FIG. 6. The programmable circuitry platform 900 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 900 of the illustrated example includes programmable circuitry 912. The programmable circuitry 912 of the illustrated example is hardware. For example, the programmable circuitry 912 can be implemented by one or more integrated circuits, logic circuits, FPGAs, microprocessors, CPUs, GPUs, DSPs, and/or microcontrollers from any desired family or manufacturer. The programmable circuitry 912 may be implemented by one or more semiconductor based (e.g., silicon based) devices. In this example, the programmable circuitry 912 implements the example system identification circuitry 620, the example connection analysis circuitry 630, the example component grouping determination circuitry 640, the example threshold determination circuitry 650, the example selection analysis circuitry 652, the example verification circuitry 654, and the example component singulation circuitry 660.

The programmable circuitry 912 of the illustrated example includes a local memory 913 (e.g., a cache, registers, etc.). The programmable circuitry 912 of the illustrated example is in communication with main memory 914, 916, which includes a volatile memory 914 and a non-volatile memory 916, by a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 916 may be implemented by flash memory and/or any other desired type of memory device. Access to the main memory 914, 916 of the illustrated example is controlled by a memory controller 917. In some examples, the memory controller 917 may be implemented by one or more integrated circuits, logic circuits, microcontrollers from any desired family or manufacturer, or any other type of circuitry to manage the flow of data going to and from the main memory 914, 916.

The programmable circuitry platform 900 of the illustrated example also includes interface circuitry 920. The interface circuitry 920 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 922 are connected to the interface circuitry 920. The input device(s) 922 permit(s) a user (e.g., a human user, a machine user, etc.) to enter data and/or commands into the programmable circuitry 912. The input device(s) 922 can be implemented by, for example, an audio sensor, a microphone, a camera (still or video), a keyboard, a button, a mouse, a touchscreen, a trackpad, a trackball, an isopoint device, and/or a voice recognition system.

One or more output devices 924 are also connected to the interface circuitry 920 of the illustrated example. The output device(s) 924 can be implemented, for example, by a semiconductor fabrication tool, display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 920 of the illustrated example, thus, typically includes a graphics driver card, a graphics driver chip, and/or graphics processor circuitry such as a GPU.

The interface circuitry 920 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 926. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 900 of the illustrated example also includes one or more mass storage discs or devices 928 to store firmware, software, and/or data. Examples of such mass storage discs or devices 928 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 932, which may be implemented by the machine readable instructions of FIG. 8, may be stored in the mass storage device 928, in the volatile memory 914, in the non-volatile memory 916, and/or on at least one non-transitory computer readable storage medium such as a CD or DVD which may be removable.

FIG. 10 is a block diagram of an example implementation of the programmable circuitry 912 of FIG. 9. In this example, the programmable circuitry 912 of FIG. 9 is implemented by a microprocessor 1000. For example, the microprocessor 1000 may be a general-purpose microprocessor (e.g., general-purpose microprocessor circuitry). The microprocessor 1000 executes some or all of the machine-readable instructions of the flowcharts of FIG. 8 to effectively instantiate the circuitry of FIG. 2 as logic circuits to perform operations corresponding to those machine readable instructions. In some such examples, the circuitry of FIG. 6 is instantiated by the hardware circuits of the microprocessor 1000 in combination with the machine-readable instructions. For example, the microprocessor 1000 may be implemented by multi-core hardware circuitry such as a CPU, a DSP, a GPU, an XPU, etc. Although it may include any number of example cores 1002 (e.g., 1 core), the microprocessor 1000 of this example is a multi-core semiconductor device including N cores. The cores 1002 of the microprocessor 1000 may operate independently or may cooperate to execute machine readable instructions. For example, machine code corresponding to a firmware program, an embedded software program, or a software program may be executed by one of the cores 1002 or may be executed by multiple ones of the cores 1002 at the same or different times. In some examples, the machine code corresponding to the firmware program, the embedded software program, or the software program is split into threads and executed in parallel by two or more of the cores 1002. The software program may correspond to a portion or all of the machine readable instructions and/or operations represented by the flowcharts of FIG. 8.

The cores 1002 may communicate by a first example bus 1004. In some examples, the first bus 1004 may be implemented by a communication bus to effectuate communication associated with one(s) of the cores 1002. For example, the first bus 1004 may be implemented by at least one of an Inter-Integrated Circuit (I2C) bus, a Serial Peripheral Interface (SPI) bus, a PCI bus, or a PCIe bus. Additionally or alternatively, the first bus 1004 may be implemented by any other type of computing or electrical bus. The cores 1002 may obtain data, instructions, and/or signals from one or more external devices by example interface circuitry 1006. The cores 1002 may output data, instructions, and/or signals to the one or more external devices by the interface circuitry 1006. Although the cores 1002 of this example include example local memory 1020 (e.g., Level 1 (L1) cache that may be split into an L1 data cache and an L1 instruction cache), the microprocessor 1000 also includes example shared memory 1010 that may be shared by the cores (e.g., Level 2 (L2 cache)) for high-speed access to data and/or instructions. Data and/or instructions may be transferred (e.g., shared) by writing to and/or reading from the shared memory 1010. The local memory 1020 of each of the cores 1002 and the shared memory 1010 may be part of a hierarchy of storage devices including multiple levels of cache memory and the main memory (e.g., the main memory 914, 916 of FIG. 9). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1002 may be referred to as a CPU, DSP, GPU, etc., or any other type of hardware circuitry. Each core 1002 includes control unit circuitry 1014, arithmetic and logic (AL) circuitry (sometimes referred to as an ALU) 1016, a plurality of registers 1018, the local memory 1020, and a second example bus 1022. Other structures may be present. For example, each core 1002 may include vector unit circuitry, single instruction multiple data (SIMD) unit circuitry, load/store unit (LSU) circuitry, branch/jump unit circuitry, floating-point unit (FPU) circuitry, etc. The control unit circuitry 1014 includes semiconductor-based circuits structured to control (e.g., coordinate) data movement within the corresponding core 1002. The AL circuitry 1016 includes semiconductor-based circuits structured to perform one or more mathematic and/or logic operations on the data within the corresponding core 1002. The AL circuitry 1016 of some examples performs integer based operations. In other examples, the AL circuitry 1016 also performs floating-point operations. In yet other examples, the AL circuitry 1016 may include first AL circuitry that performs integer-based operations and second AL circuitry that performs floating-point operations. In some examples, the AL circuitry 1016 may be referred to as an Arithmetic Logic Unit (ALU).

The registers 1018 are semiconductor-based structures to store data and/or instructions such as results of one or more of the operations performed by the AL circuitry 1016 of the corresponding core 1002. For example, the registers 1018 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1018 may be arranged in a bank as shown in FIG. 10. Alternatively, the registers 1018 may be organized in any other arrangement, format, or structure, such as by being distributed throughout the core 1002 to shorten access time. The second bus 1022 may be implemented by at least one of an I2C bus, a SPI bus, a PCI bus, or a PCIe bus.

Each core 1002 and/or, more generally, the microprocessor 1000 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1000 is a semiconductor device fabricated to include many transistors interconnected to implement the structures described above in one or more integrated circuits (ICs) contained in one or more packages.

The microprocessor 1000 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1000, in the same chip package as the microprocessor 1000 and/or in one or more separate packages from the microprocessor 1000.

FIG. 11 is a block diagram of another example implementation of the programmable circuitry 912 of FIG. 9. In this example, the programmable circuitry 912 is implemented by FPGA circuitry 1100. For example, the FPGA circuitry 1100 may be implemented by an FPGA. The FPGA circuitry 1100 can be used, for example, to perform operations that could otherwise be performed by the example microprocessor 1000 of FIG. 10 executing corresponding machine readable instructions. However, once configured, the FPGA circuitry 1100 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1000 of FIG. 10 described above (which is a general purpose device that may be programmed to execute some or all of the machine readable instructions represented by the flowchart(s) of FIG. 8 but whose interconnections and logic circuitry are fixed once fabricated), the FPGA circuitry 1100 of the example of FIG. 11 includes interconnections and logic circuitry that may be configured, structured, programmed, and/or interconnected in different ways after fabrication to instantiate, for example, some or all of the operations/functions corresponding to the machine readable instructions represented by the flowchart(s) of FIG. 8. In particular, the FPGA circuitry 1100 may be thought of as an array of logic gates, interconnections, and switches. The switches can be programmed to change how the logic gates are interconnected by the interconnections, effectively forming one or more dedicated logic circuits (unless and until the FPGA circuitry 1100 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIG. 8. As such, the FPGA circuitry 1100 may be configured and/or structured to effectively instantiate some or all of the operations/functions corresponding to the machine readable instructions of the flowchart(s) of FIG. 8 as dedicated logic circuits to perform the operations/functions corresponding to those software instructions in a dedicated manner analogous to an ASIC. Therefore, the FPGA circuitry 1100 may perform the operations/functions corresponding to the some or all of the machine readable instructions of FIG. 8 faster than the general-purpose microprocessor can execute the same.

In the example of FIG. 11, the FPGA circuitry 1100 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

The FPGA circuitry 1100 of FIG. 11, includes example input/output (I/O) circuitry 1102 to obtain and/or output data to/from example configuration circuitry 1104 and/or external hardware 1106. For example, the configuration circuitry 1104 may be implemented by interface circuitry that may obtain a binary file, which may be implemented by a bit stream, data, and/or machine-readable instructions, to configure the FPGA circuitry 1100, or portion(s) thereof. In some such examples, the configuration circuitry 1104 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1106 may be implemented by external hardware circuitry. For example, the external hardware 1106 may be implemented by the microprocessor 1000 of FIG. 10.

The FPGA circuitry 1100 also includes an array of example logic gate circuitry 1108, a plurality of example configurable interconnections 1110, and example storage circuitry 1112. The logic gate circuitry 1108 and the configurable interconnections 1110 are configurable to instantiate one or more operations/functions that may correspond to at least some of the machine readable instructions of FIG. 8 and/or other desired operations. The logic gate circuitry 1108 shown in FIG. 11 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1108 to enable configuration of the electrical structures and/or the logic gates to form circuits to perform desired operations/functions. The logic gate circuitry 1108 may include other electrical structures such as look-up tables (LUTs), registers (e.g., flip-flops or latches), multiplexers, etc.

The configurable interconnections 1110 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1108 to program desired logic circuits.

The storage circuitry 1112 of the illustrated example is structured to store result(s) of the one or more of the operations performed by corresponding logic gates. The storage circuitry 1112 may be implemented by registers or the like. In the illustrated example, the storage circuitry 1112 is distributed amongst the logic gate circuitry 1108 to facilitate access and increase execution speed.

The example FPGA circuitry 1100 of FIG. 11 also includes example dedicated operations circuitry 1114. In this example, the dedicated operations circuitry 1114 includes special purpose circuitry 1116 that may be invoked to implement commonly used functions to avoid the need to program those functions in the field. Examples of such special purpose circuitry 1116 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1100 may also include example general purpose programmable circuitry 1118 such as an example CPU 1120 and/or an example DSP 1122. Other general purpose programmable circuitry 1118 may additionally or alternatively be present such as a GPU, an XPU, etc., that can be programmed to perform other operations.

Although FIGS. 10 and 11 illustrate two example implementations of the programmable circuitry 912 of FIG. 9, many other approaches are contemplated. For example, FPGA circuitry may include an on-board CPU, such as one or more of the example CPU 1120 of FIG. 10. Therefore, the programmable circuitry 912 of FIG. 9 may additionally be implemented by combining at least the example microprocessor 1000 of FIG. 10 and the example FPGA circuitry 1100 of FIG. 11. In some such hybrid examples, one or more cores 1002 of FIG. 10 may execute a first portion of the machine readable instructions represented by the flowchart(s) of FIG. 8 to perform first operation(s)/function(s), the FPGA circuitry 1100 of FIG. 11 may be configured and/or structured to perform second operation(s)/function(s) corresponding to a second portion of the machine readable instructions represented by the flowcharts of FIG. 8, and/or an ASIC may be configured and/or structured to perform third operation(s)/function(s) corresponding to a third portion of the machine readable instructions represented by the flowcharts of FIG. 8.

It should be understood that some or all of the circuitry of FIG. 6 may, thus, be instantiated at the same or different times. For example, same and/or different portion(s) of the microprocessor 1000 of FIG. 10 may be programmed to execute portion(s) of machine-readable instructions at the same and/or different times. In some examples, same and/or different portion(s) of the FPGA circuitry 1100 of FIG. 11 may be configured and/or structured to perform operations/functions corresponding to portion(s) of machine-readable instructions at the same and/or different times.

In some examples, some or all of the circuitry of FIG. 6 may be instantiated, for example, in one or more threads executing concurrently and/or in series. For example, the microprocessor 1000 of FIG. 10 may execute machine readable instructions in one or more threads executing concurrently and/or in series. In some examples, the FPGA circuitry 1100 of FIG. 11 may be configured and/or structured to carry out operations/functions concurrently and/or in series. Moreover, in some examples, some or all of the circuitry of FIG. 6 may be implemented within one or more virtual machines and/or containers executing on the microprocessor 1000 of FIG. 10.

In some examples, the programmable circuitry 912 of FIG. 9 may be in one or more packages. For example, the microprocessor 1000 of FIG. 10 and/or the FPGA circuitry 1100 of FIG. 11 may be in one or more packages. In some examples, an XPU may be implemented by the programmable circuitry 912 of FIG. 9, which may be in one or more packages. For example, the XPU may include a CPU (e.g., the microprocessor 1000 of FIG. 10, the CPU 1120 of FIG. 11, etc.) in one package, a DSP (e.g., the DSP 1122 of FIG. 11) in another package, a GPU in yet another package, and an FPGA (e.g., the FPGA circuitry 1100 of FIG. 11) in still yet another package.

A block diagram illustrating an example software distribution platform 1205 to distribute software such as the example machine readable instructions 932 of FIG. 9 to other hardware devices (e.g., hardware devices owned and/or operated by third parties from the owner and/or operator of the software distribution platform) is illustrated in FIG. 12. The example software distribution platform 1205 may be implemented by any computer server, data facility, cloud service, etc., capable of storing and transmitting software to other computing devices. The third parties may be customers of the entity owning and/or operating the software distribution platform 1205. For example, the entity that owns and/or operates the software distribution platform 1205 may be a developer, a seller, and/or a licensor of software such as the example machine readable instructions 932 of FIG. 9. The third parties may be consumers, users, retailers, OEMs, etc., who purchase and/or license the software for use and/or re-sale and/or sub-licensing. In the illustrated example, the software distribution platform 1205 includes one or more servers and one or more storage devices. The storage devices store the machine readable instructions 932, which may correspond to the example machine readable instructions of FIG. 8, as described above. The one or more servers of the example software distribution platform 1205 are in communication with an example network 1210, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 932 from the software distribution platform 1205. For example, the software, which may correspond to the example machine readable instructions of FIG. 8, may be downloaded to the example programmable circuitry platform 900, which is to execute the machine readable instructions 932 to implement the disaggregation facilitation circuitry 600. In some examples, one or more servers of the software distribution platform 1205 periodically offer, transmit, and/or force updates to the software (e.g., the example machine readable instructions 932 of FIG. 9) to ensure improvements, patches, updates, etc., are distributed and applied to the software at the end user devices. Although referred to as software above, the distributed "software" could alternatively be firmware.

"including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that disaggregate integrated circuits (e.g., semiconductor dies) into heterogenous chiplets or tiles. Examples disclosed herein can determine functional block layouts for semiconductor dies to enable efficient utilization of a reticle and, in turn, enable fabrication of electronic systems to be flexible and cost efficient-even for systems that are not fabricated in bulk.

Methods and apparatus for disaggregation of semiconductor dies in an integrated circuit package are disclosed herein. Further examples and combinations thereof include the following:
Example 1 includes an apparatus comprising interface circuitry, machine readable instructions, and programmable circuitry to at least one of instantiate or execute the machine readable instructions to generate an adjacency matrix for different functional blocks to be implemented in an integrated circuit, the adjacency matrix defining connections between ones of the functional blocks, and determine a group of the functional blocks to be included in a first chiplet of a plurality of chiplets for the integrated circuit, the group of the functional blocks determined based on weights assigned to the connections defined in the adjacency matrix.
Example 2 includes the apparatus of example 1, wherein the weights are based on a communication channel capacity of the connections between the ones of the functional blocks.
Example 3 includes the apparatus of example 1, wherein the programmable circuitry is to determine the group of the functional blocks to be included in the first chiplet based on a first area of the first chiplet and a second area of a reticle to be utilized for fabrication of the first chiplet.
Example 4 includes the apparatus of example 3, wherein the first area of the first chiplet enables multiple instances of the first chiplet to be arranged within the second area so as to occupy at least 80% of the second area.
Example 5 includes the apparatus of example 3, wherein the programmable circuitry is to determine whether the first area of the first chiplet satisfies a first area threshold, and when the first area does not satisfy the first area threshold, at least one of add another functional block to the group, or substitute at least one of the functional blocks of the group with another functional block.
Example 6 includes the apparatus of example 5, wherein the programmable circuitry is to when the first area satisfies the first area threshold, determine whether the first area satisfies a second area threshold, when the first area does not satisfy the second area threshold, at least one of remove at least one of the functional blocks from the group, or substitute at least one of the functional blocks of the group with another functional block.
Example 7 includes the apparatus of example 6, wherein the programmable circuitry is to determine the first area threshold and the second area threshold based on a yield threshold.
Example 8 includes the apparatus of example 3, wherein the programmable circuitry is to compute the first area based on a quantity of transistors per unit of area associated with the functional blocks in the group and a quantity of transistors associated with the functional blocks in the group.
Example 9 includes a non-transitory machine readable storage medium comprising instructions to cause programmable circuitry to at least generate an adjacency matrix for different functional blocks to be implemented in an integrated circuit, the adjacency matrix defining connections between ones of the functional blocks, and determine a group of the functional blocks to be included in a first chiplet of a plurality of chiplets for the integrated circuit, the group of the functional blocks determined based on weights assigned to the connections defined in the adjacency matrix.
Example 10 includes the non-transitory machine readable storage medium of example 9, wherein the weights are based on a communication channel capacity of the connections between the ones of the functional blocks.
Example 11 includes the non-transitory machine readable storage medium of example 9, wherein the instructions cause the programmable circuitry to determine the group of the functional blocks to be included in the first chiplet based on a first area of the first chiplet and a second area of a reticle to be utilized for fabrication of the first chiplet.
Example 12 includes the non-transitory machine readable storage medium of example 11, wherein the first area of the first chiplet enables multiple instances of the first chiplet to be arranged within the second area so as to occupy at least 80% of the second area.
Example 13 includes the non-transitory machine readable storage medium of example 11, wherein the instructions cause the programmable circuitry to determine whether the first area of the first chiplet satisfies a first area threshold, and when the first area does not satisfy the first area threshold, at least one of add another functional block to the group, or substitute at least one of the functional blocks of the group with another functional block.
Example 14 includes the non-transitory machine readable storage medium of example 13, wherein the instructions cause the programmable circuitry to when the first area satisfies the first area threshold, determine whether the first area satisfies a second area threshold, when the first area does not satisfy the second area threshold, at least one of remove at least one of the functional blocks from the group, or substitute at least one of the functional blocks of the group with another functional block.
Example 15 includes the non-transitory machine readable storage medium of example 14, wherein the instructions cause the programmable circuitry to determine the first area threshold and the second area threshold based on a yield threshold.
Example 16 includes the non-transitory machine readable storage medium of example 11, wherein the instructions cause the programmable circuitry to compute the first area based on a quantity of transistors per unit of area associated with the functional blocks in the group and a quantity of transistors associated with the functional blocks in the group.
Example 17 includes a method comprising generating an adjacency matrix for different functional blocks to be implemented in an integrated circuit, the adjacency matrix defining connections between ones of the functional blocks, and determining a group of the functional blocks to be included in a first chiplet of a plurality of chiplets for the integrated circuit, the group of the functional blocks determined based on weights assigned to the connections defined in the adjacency matrix.
Example 18 includes the method of example 17, wherein the weights are based on a communication channel capacity of the connections between the ones of the functional blocks.
Example 19 includes the method of example 17, further including determining the group of the functional blocks to be included in the first chiplet based on a first area of the first chiplet and a second area of a reticle to be utilized for fabrication of the first chiplet.
Example 20 includes the method of example 19, wherein the first area of the first chiplet enables multiple instances of the first chiplet to be arranged within the second area so as to occupy at least 80% of the second area.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A method comprising:
generating an adjacency matrix for different functional blocks to be implemented in an integrated circuit, the adjacency matrix defining connections between ones of the functional blocks; and
determining a group of the functional blocks to be included in a first chiplet of a plurality of chiplets for the integrated circuit, the group of the functional blocks determined based on weights assigned to the connections defined in the adjacency matrix.

2. The method of claim 1, wherein the weights are based on a communication channel capacity of the connections between the ones of the functional blocks.

3. The method of any preceding claim, further including determining the group of the functional blocks to be included in the first chiplet based on a first area of the first chiplet and a second area of a reticle to be utilized for fabrication of the first chiplet.

4. The method of claim 3, wherein the first area of the first chiplet enables multiple instances of the first chiplet to be arranged within the second area so as to occupy at least 80% of the second area.

5. The method of claim 3 or claim 4, further including:
determining whether the first area of the first chiplet satisfies a first area threshold; and
when the first area does not satisfy the first area threshold, at least one of:
adding another functional block to the group; or
substituting at least one of the functional blocks of the group with another functional block.

6. The method of claim 5,
when the first area satisfies the first area threshold, determining whether the first area satisfies a second area threshold;
when the first area does not satisfy the second area threshold, at least one of:
removing at least one of the functional blocks from the group; or
substituting at least one of the functional blocks of the group with another functional block.

7. The method of claim 6, further including determining the first area threshold and the second area threshold based on a yield threshold.

8. The method of any of claims 3-7, further including computing the first area based on a quantity of transistors per unit of area associated with the functional blocks in the group and a quantity of transistors associated with the functional blocks in the group.

9. An apparatus comprising:
interface circuitry;
machine readable instructions; and
programmable circuitry to at least one of instantiate or execute the machine readable instructions to:
generate an adjacency matrix for different functional blocks to be implemented in an integrated circuit, the adjacency matrix defining connections between ones of the functional blocks; and
determine a group of the functional blocks to be included in a first chiplet of a plurality of chiplets for the integrated circuit, the group of the functional blocks determined based on weights assigned to the connections defined in the adjacency matrix.

10. The apparatus of claim 9, wherein the programmable circuitry is to determine the group of the functional blocks to be included in the first chiplet based on a first area of the first chiplet and a second area of a reticle to be utilized for fabrication of the first chiplet.

11. The apparatus of claim 10, wherein the programmable circuitry is to:
determine whether the first area of the first chiplet satisfies a first area threshold; and
when the first area does not satisfy the first area threshold, substitute at least one of the functional blocks of the group with another functional block.

12. The apparatus of claim 10, wherein the programmable circuitry is to:
determine whether the first area of the first chiplet satisfies a first area threshold; and
when the first area does not satisfy the first area threshold, add another functional block to the group.

13. The apparatus of claim 11 or claim 12, wherein the programmable circuitry is to:
when the first area satisfies the first area threshold, determine whether the first area satisfies a second area threshold; and
when the first area does not satisfy the second area threshold, substitute at least one of the functional blocks of the group with another functional block.

14. The apparatus of claim 11 or claim 12, wherein the programmable circuitry is to:
when the first area satisfies the first area threshold, determine whether the first area satisfies a second area threshold; and
when the first area does not satisfy the second area threshold, remove at least one of the functional blocks from the group.

15. Machine-readable storage including machine-readable instructions to, when executed, implement a method or realize an apparatus as claimed in any preceding claim.
